# EUROPEAN PATENT APPLICATION

(11) **EP 3 852 497 A1**
(43) Date of publication of application: **21.07.2021**
(21) Application number: 21151855.0
(22) Date of filing: 15.01.2021
(51) Int. Cl.: H05B 45/20, H05B 47/11, H05B 47/19

(54) **SMART LAMP, AND LIGHT AND COLOR ADJUSTMENT CIRCUIT THEREOF**

(30) Priority: 17.01.2020 CN 202020111073 U
(71) Applicant: Leedarson Lighting Co., Ltd., Changtai Zhangzhou Fujian (CN)
(72) Inventor: CHEN, Yanbiao, Zhangzhou, Fujian (CN); LIN, Liping, Zhangzhou, Fujian (CN)
(74) Representative: Yang, Shu

(57) **Abstract**

The present application involves in the field of electronic circuit technologies, and particularly to a smart lamp and its light and color adjustment circuit connected to a light emitting module. The light emitting module includes a string of green LEDs and a string of red LEDs, and further includes a first string of blue LEDs and a second string of blue LEDs emitting light with different preset wavelengths. The light and color adjustment circuit includes an induction circuit, a filter circuit, a radio frequency circuit and a control circuit, and outputs an induction signal through acquiring illumination intensity of a surrounding preset area, and filters the induction signal to acquire a feedback signal, and finally adjusts luminous flux of the first string of blue LEDs, the second string of blue LEDs, the string of green LEDs and the string of red LEDs according to the feedback signal, so as to synthesize a multiple modes of spectra. As a result, the brightness and color of the smart lamp can be adjusted, strengthen or weaken, according to different illumination intensity, which realizes a full spectrum mode, improves the user experience, and solves the problems that the existing lamps cannot realize the full spectrum mode and are provided with a relatively single light-emitting mode.

## Description

### TECHNICAL FIELD

The present application involves in the field of electronic circuit technologies, and particularly to a smart lamp, and a light and color adjustment circuit thereof.

### BACKGROUND

It is known to all that, existing white light spectrum lacks partial spectrum with wavelengths of 460nm ∼ 490nm, and non-visual photoreceptor cells of human eyes are provided with the greatest sensitivity to blue light with wavelengths around 460nm ∼ 490nm; controlling the radiation amount of the wavelengths of 460nm ∼ 490nm will affect secretion of melatonin in a human body; moreover, the blue light, the wavelength of which is less that 450nm, is harmful to human eyes. However, traditional lamps cannot realize a full spectrum mode, and their light emitting mode is relatively single, and thus the user experience is poor.

Therefore, the existing lamps have the problems that the full spectrum mode cannot be realized and the light emitting mode is relatively single.

### SUMMARY

Given this, embodiments of the present application provide a smart lamp and its light and color adjustment circuit, which are aimed at solving the problems that the existing lamps cannot achieve the full spectrum mode and are provided with a relatively single light-emitting mode.

A first aspect of embodiments of the present application provides a light and color adjustment circuit of a smart lamp, the light and color adjustment circuit is connected to a light emitting module comprising a string of green LEDs and a string of red LEDs, and further comprising a first string of blue LEDs and a second string of blue LEDs emitting light with different preset wavelengths, the light and color adjustment circuit comprises:
an induction circuit, configured to acquire illumination intensity of a surrounding preset area and output a induction signal;
a filter circuit, connected to the induction circuit and configured to filter the induction signal;
a radio frequency circuit, connected to the filter circuit and configured to output a feedback signal according to the filtered induction signal; and
a control circuit, connected to the radio frequency circuit and the light emitting module, and configured to adjust luminous flux of the first string of blue LEDs, the second string of blue LEDs, the string of green LEDs and the string of red LEDs according to the feedback signal to synthesize multiple modes of spectra.

Preferably, the light and color adjustment circuit further comprises:
a rectifier circuit, connected to a power supply circuit and configured to rectify a power supply signal output by the power supply circuit.

Preferably, the light and color adjustment circuit further comprises:
an inverter circuit, connected to the rectifier circuit, the control circuit and the radio frequency circuit, and configured to invert the rectified power supply signal and supply power to the control circuit and the radio frequency circuit.

Preferably, the induction circuit is implemented by an antenna.

Preferably, the filter circuit comprises a first inductor and a first capacitor, a first end of the first inductor and a first end of the first capacitor are connected to the induction circuit, a second end of the first capacitor is grounded, and a second end of the first inductor is connected to the radio frequency circuit.

Preferably, the multiple modes comprise a day mode, a night mode, and a reading mode.

Preferably, a preset wavelength of light emitted by the first string of blue LEDs is from 435 nm to 465 nm, and a preset wavelength of light emitted by the second string of blue LEDs is from 465 nm to 495 nm.

Preferably, the control circuit is implemented by a single-chip microcomputer.

A first aspect of embodiments of the present application provides a smart lamp, the smart lamp comprises a light emitting module, the light emitting module comprises a string of green LEDs and a string of red LEDs, and further comprises a first string of blue LEDs and a second string of blue LEDs emitting light with a preset wavelength, the smart lamp further comprises:
the light and color adjustment circuit described above; and
a power supply circuit configured to provide a power supply signal to the light and color adjustment circuit.

Preferably, the power supply circuit comprises an AC power supply provided with a preset voltage value.

The smart lamp and its light and color adjustment circuit are connected to the light emitting module. The light emitting module includes the string of green LEDs and the string of red LEDs, and further includes the first string of blue LEDs and the second string of blue LEDs emitting light with different preset wavelengths. The light and color adjustment circuit includes the induction circuit, the filter circuit, the radio frequency circuit, and the control circuit, and outputs the induction signal through acquiring the illumination intensity of the surrounding preset area, and filters the induction signal to acquire the feedback signal, and finally adjusts the luminous flux of the first string of blue LEDs, the second string of blue LEDs, the string of green LEDs and the string of red LEDs according to the feedback signal, so as to synthesize the multiple modes of spectra. As a result, the brightness and color of the smart lamp can be adjusted, strengthen or weaken, according to different illumination intensity, which realizes the full spectrum mode, improves the user experience, and solves the problems that the existing lamps cannot realize the full spectrum mode and are provided with a relatively single light-emitting mode.

### DESCRIPTION OF THE DRAWINGS

In order to more clearly illustrate the technical solutions in the embodiments of the present application, the drawings that need to be used in the description for the embodiments or the prior art will be briefly introduced below. Obviously, the drawings in the following description are only some embodiments of the present application, and other drawings may also be obtained based on these drawings for those of ordinary skill in the art without paying creative effort.
FIG. 1 is a structural schematic diagram of modules of a light and color adjustment circuit of a smart lamp provided by the present application.
FIG. 2 is a specific structural schematic diagram of modules of a light and color adjustment circuit of a smart lamp provided by the present application.
FIG. 3 is an exemplary circuit diagram of the light and color adjustment circuit of the smart lamp in FIG. 2.
FIG. 4 is a structural schematic diagram of a light emitting module in a light and color adjustment circuit of a smart lamp according to an embodiment of the application.
FIG. 5 is a structural schematic diagram of a light emitting module in a light and color adjustment circuit of a smart lamp according to another embodiment of the application.
FIG. 6 is a schematic diagram of a spectrum waveform after blue light with a wavelength of 480 nm is reduced in a light and color adjustment circuit of a smart lamp provided by the present application.
FIG. 7 is a schematic diagram of a spectrum waveform after blue light with a wavelength of 480 nm is increased in a light and color adjustment circuit of a smart lamp provided by the present application.

### DETAILED EMBODIMENTS

In order to make the purpose, technical solutions, and advantages of the present application more comprehensible, the present application will be further described in detail with reference to the accompanying drawings and embodiments. It should be understood that the specific embodiments described herein are only used to explain the present application, but not to limit the present application.

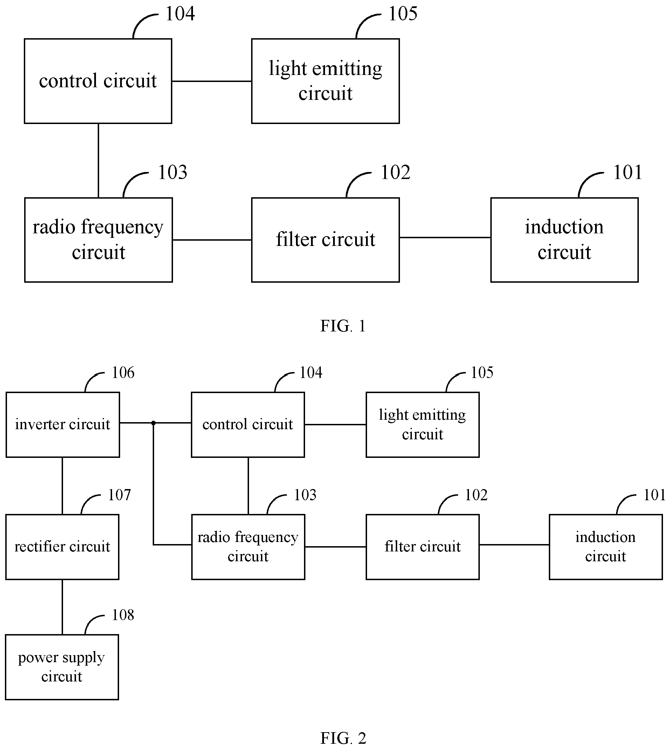

Please refer to FIG. 1, the present application provides a structure of modules of a light and color adjustment circuit of a smart lamp. For ease of description, only parts related to this embodiment are shown, and the details are as follows.

The light and color adjustment circuit of the smart lamp is connected to a light emitting module 105. The light emitting module 105 includes a string of green LEDs and a string of red LEDs, and further includes a first string of blue LEDs and a second string of blue LEDs that emit different preset wavelengths. The light and color adjustment circuit includes an induction circuit 101, a filter circuit 102, a radio frequency circuit 103, and a control circuit 104.

The induction circuit 101 is configured to acquire illumination intensity of a surrounding preset area and output an induction signal.

Specifically, the induction circuit 101 acquires the illumination intensity of the surrounding preset area by means of receiving an external signal instruction or self-induction, so as to output the induction signal.

The filter circuit 102 is connected to the induction circuit 101 and is configured to filter the induction signal.

Specifically, the filter circuit 102 appropriately filters out a signal of a specific band frequency in the induction signal to suppress and prevent interference.

The radio frequency circuit 103 is connected to the filter circuit 102 and is configured to output a feedback signal according to the filtered induction signal.

Specifically, the feedback signal output by the radio frequency circuit 103 enables the control circuit 104 to adjust a light emitting mode of the light emitting module 105, thereby achieving the effect of realizing the full spectrum mode.

The control circuit 104 is connected to the radio frequency circuit 103 and the light emitting module 105, and is configured to adjust luminous flux of the first string of blue light LEDs, the second string of blue light LEDs, the string of green LEDs, and the string of red LEDs according to the feedback signal, so as to synthesize multiple modes of spectra.

Exemplarily, the multiple modes include a day mode, a night mode, and a reading mode. Moreover, the preset wavelength of the light emitted by the first string of blue light LEDs is from 435 nm to 465 nm, and the preset wavelength of the light emitted by the second string of blue light LEDs is from 465 nm to 495 nm. Therefore, when in the day mode: the blue light with wavelengths of 480±15 nm is increased to reduce secretion of melatonin and improve mind and concentration; when in the night mode: the blue light with wavelengths of 480±15 nm is reduced to increase the secretion of the melatonin and promote sleep; when in the reading mode: the proportion of the blue light, green light and red light with wavelengths of 450±15 nm and wavelengths of 480±15 nm is adjusted to achieve the full spectrum mode.

Please refer to FIG. 2, the present application provides a specific structure of modules of a light and color adjustment circuit of a smart lamp. For ease of description, only parts related to this embodiment are shown, which are detailed as follows.

As an embodiment of the present application, the light and color adjustment circuit, based on FIG. 1, further includes a rectifier circuit 107, which is connected to a power supply circuit 108 and is configured to rectify a power signal output by the power supply circuit 108.

Specifically, the rectifier circuit 107 is configured to output a DC (direct current) electric signal after rectifying an AC (alternating current) electric signal output by the power supply circuit 108. The rectifier circuit 107 is implemented by a rectifier bridge that may be a full-bridge rectifier or a half-bridge rectifier, which can be set according to actual conditions.

As an embodiment of the present application, the light and color adjustment circuit, based on FIG. 1, further includes an inverter circuit 106. The inverter circuit 106 is connected to the rectifier circuit 107, the control circuit 104, and the radio frequency circuit 103, and is configured to invert the rectified power signal and supply power for the control circuit 104 and the radio frequency circuit 103.

Specifically, the inverter circuit 106 is configured to output an AC (alternating current) electric signal after inverting the rectified DC electric signal, so as to supply power to the control circuit 104 and the radio frequency circuit 103.

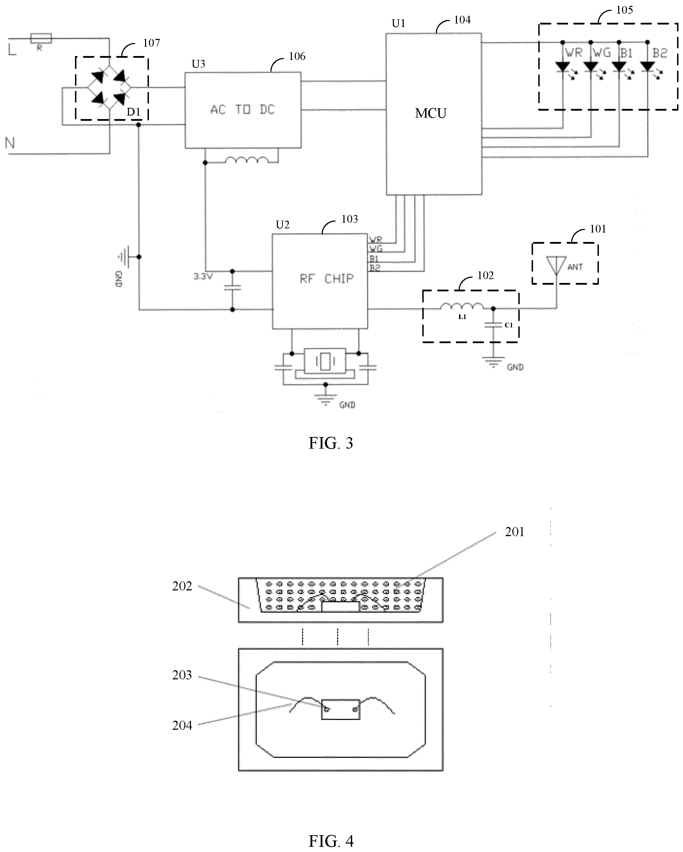

FIG. 3 shows an exemplary circuit of the light and color adjustment circuit of the smart lamp corresponding to FIG. 2. For ease of description, only parts related to this embodiment are shown, which are detailed as follows.

As an optional implementation, the induction circuit 101 is implemented by an antenna ANT.

As an optional implementation, the filter circuit 102 includes a first inductor L1 and a first capacitor C1;
a first end of the first inductor L1 and a first end of the first capacitor C1 are connected to the induction circuit 101, a second end of the first capacitor C1 is grounded, and a second end of the first inductor L1 is connected to the radio frequency circuit 103.

As an optional implementation, the radio frequency circuit 103 is implemented by a radio frequency chip U2.

As an optional implementation, the control circuit 104 is implemented by a single-chip microcomputer U1.

As an optional implementation, the light emitting module 105 includes a string of green LEDs WG, a string of red LEDs WR, a string of blue LEDs B1 with wavelengths of 480±15 nm, and a string of blue LEDs B2 with wavelengths of 450±15 nm.

As an optional implementation, the inverter circuit 106 is implemented by an inverter chip U3.

As an optional implementation, the rectifier circuit 107 is implemented by a rectifier bridge D1.

FIG. 4 shows a structure of a light emitting module in a light and color adjustment circuit of a smart lamp according to an embodiment of the application. For ease of description, only parts related to this embodiment are shown, which are detailed as follows.

As an optional implementation, the light emitting module 105 includes a support 202, an LED chip 203 disposed on the support 202, and a gold wire 204 connected to the LED chip 203;
among them, the shape of the support 202 is concave, and phosphor 201 may be placed at a spatial position corresponding to its opening. The phosphor 201 includes blue phosphor, green phosphor and red phosphor. Of course, transparent silica gel may also be placed.

Exemplarily, the LED chip 203 emits blue light or violet light to excite the blue phosphor and then the blue light with wavelengths of 480±15 nm is emitted;
alternatively, the LED chip 203 emits blue light to excite the green phosphor and then the green light is emitted;
alternatively, the LED chip 203 emits blue light to excite the red phosphor and then the red light is emitted;
alternatively, the LED chip 203 emits blue light to excite the transparent silica gel and then the blue light with wavelengths of 450±15 nm is emitted.

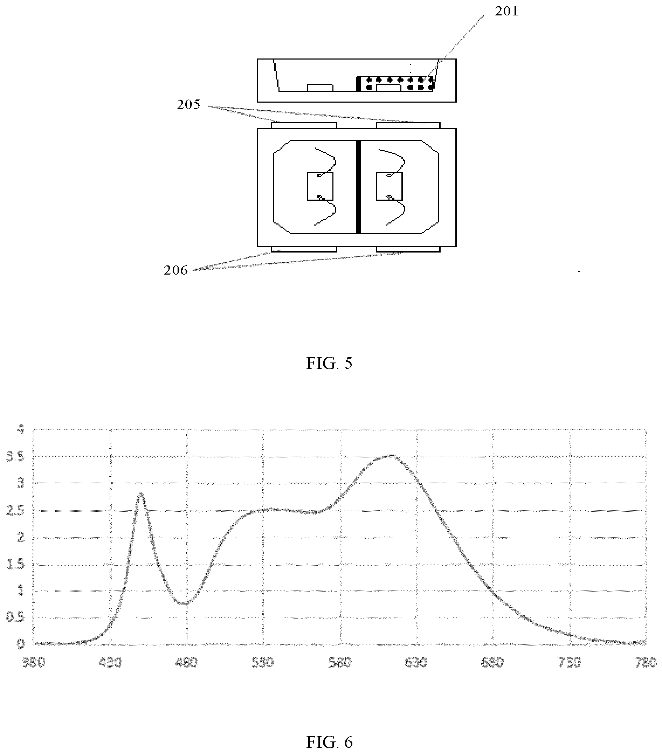

FIG. 5 shows a structure of a light emitting module in a light and color adjustment circuit of a smart lamp according to another embodiment of the application. For ease of description, only parts related to this embodiment are shown, and the details are as follows.

As an optional implementation, the light emitting module 105 further includes a positive terminal 205 and a negative terminal 206.

The difference from FIG. 4 is that the LED blue light and the blue phosphors to be excited by the LED blue light are placed in the same support, so that the same light source achieves different blue light spectra; and there is only one end for the positive electrode and the negative electrode, and the blue light with wavelengths of 450±15 nm is emitted when the positive electrode and the negative electrode are conventionally connected, and the blue light with wavelengths of 480±15 nm is emitted when the positive and negative are reversely connected.

The present application also provides a smart lamp, which includes the light emitting module 105. The light emitting module 105 includes a string of green LEDs and a string of red LEDs, and further includes a first string of blue LEDs and a second string of blue LEDs that emit light with a preset wavelength. The smart lamp further includes:
the light and color adjustment circuit as described above; and
a power supply circuit 108 configured to provide a power supply signal to the light and color adjustment circuit.

It should be noted that the smart lamp adds the light emitting module 105 and the power supply circuit 108 on the basis of the light and color adjustment circuit. Therefore, the functional description and principle description for the induction circuit 101, the filter circuit 102, and the radio frequency circuit 103, the control circuit 104, the inverter circuit 106, and the rectifier circuit 107 in the light and color adjustment circuit may refer to the embodiments of FIGS. 1 to 5, which will not be repeated herein again. In addition, the power supply circuit 108 includes an AC power supply provided with a preset voltage value, and the preset voltage value may be set according to actual needs.

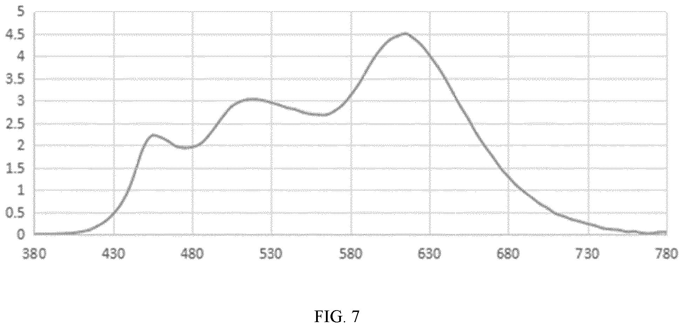

FIG. 6 and FIG. 7 respectively show the spectrum waveform after the blue light with wavelengths of 480±15 nm is reduced and the spectrum waveform after the blue light with wavelengths of 480±15 nm is increased in the light and color adjustment circuit of the smart lamp provided by the present application. For ease of description, only parts related to this embodiment are shown, which are detailed as follows.

In FIG. 6, the 4000k color temperature reduces the blue light component with wavelengths of 480±15 nm, thereby reducing the effect on melatonin.

In FIG. 7, the 4000k color temperature increases the blue light component with wavelengths of 480±15 nm to realize the full spectrum mode, which improves the mind during the day and reduces the hazard of the blue light. Compared with FIG. 6, that is, the same color temperature (color) achieves different spectra, but the content of the blue light with wavelengths of 480±15 nm in different spectra controls the affect on human melatonin and the affect on circadian rhythm.

The operation principles of the above-mentioned smart lamp and its light and color adjustment circuit will be described below in conjunction with FIGS. 1 to 7:
First, after the AC electric signal output by the power supply circuit 108 is sequentially rectified by the rectifier circuit 107 and inverted by the inverter circuit 106, the electric signal with a preset voltage value is output to supply power to the control circuit 104 and the radio frequency circuit 103;
Next, the induction circuit 101 acquires the illumination intensity of the surrounding preset area and outputs the induction signal; the filter circuit 102 filters the induction signal, so that the radio frequency circuit 103 acquires the feedback signal;
Finally, the control circuit 104 adjusts the luminous flux of the first string of blue LEDs, the second string of blue LEDs, the string of green LEDs, and the string of red LEDs according to the feedback signal, so as to synthesize the multiple modes of spectra.

It can be seen that, in the above method, the blue phosphor is excited by the blue LED chip to realize the blue light with wavelengths of 480±15 nm, which is mixed with the blue light with wavelengths of 450±15 nm, the green light, and red light; the proportion of the blue light with wavelengths of 480±15 nm and the blue light with wavelengths of 450±15 nm is adjusted to realize different spectra under the same color temperature, control the human body's circadian rhythm, and realize the full spectrum mode, thereby the user experience is improved.

To sum up, the above-mentioned smart lamp and its light and color adjustment circuit in the embodiments of the present application are connected to the light emitting module. The light emitting module includes the string of green LEDs and the string of red LEDs, and further includes the first string of blue LEDs and the second string of blue LEDs emitting light with different preset wavelengths. The light and color adjustment circuit includes the induction circuit, the filter circuit, the radio frequency circuit, and the control circuit, and outputs the induction signal through acquiring the illumination intensity of the surrounding preset area, and filters the induction signal to acquire the feedback signal, and finally adjust the luminous flux of the first string of blue LEDs, the second string of blue LEDs, the string of green LEDs and the string of red LEDs according to the feedback signal, so as to synthesize the multiple modes of spectra. As a result, the brightness and color of the smart lamp can be adjusted, strengthen or weaken, according to different illumination intensity, which realizes the full spectrum mode, improves the user experience, and solves the problems that the existing lamps cannot realize the full spectrum mode and are provided with a relatively single light-emitting mode.

Various embodiments are described herein for various devices, circuits, apparatuses, systems, and/or methods. Many specific details are set forth to provide a thorough understanding of the overall structure, function, manufacture, and use of the implementations as described in the specification and shown in the drawings. However, those skilled in the art will understand that the implementations may be implemented without such specific details. In other embodiments, well-known operations, components, and elements are described in detail so as not to make the implementations in the specification difficult to understand. Those skilled in the art will understand that the implementations described herein and shown are non-limiting examples, and therefore can recognize that the specific structure and function details disclosed herein may be representative and do not necessarily limit the scope of the implementations.

Throughout the specification, the references to "various embodiments", "in an embodiment", "one embodiment" or "an implementation", etc. mean that a particular feature, structure or characteristic described with respect to an implementation is included in at least one implementations. Therefore, the phrases "in various embodiments", "in some embodiments", "in one embodiment" or "in an embodiment" appeared at appropriate places throughout the specification do not necessarily all refer to the same implementation. In addition, the specific feature, structure, or characteristic can be combined in any suitable manner in one or more implementations. Therefore, the specific feature, structure, or characteristic shown or described with respect to one implementation may be combined in whole or in part with the feature, structure, or characteristic of one or more other implementations, without assuming that such a combination is not illogical or has no functional limitation. Any direction reference (for example, add, subtract, top, bottom, upward, downward, left, right, toward the left, toward the right, top, bottom, above, below, vertical, horizontal, clockwise and counterclockwise) is used for an identification purpose to help readers understand the present disclosure, and does not create limitations, especially regarding the location, orientation, or use of the implementations.

Although some implementations are described above in detail to some degree, those skilled in the art can make many changes to the disclosed implementations without departing from the scope of the present disclosure. The connection (e.g., attachment, coupling, connection, etc.) should be interpreted broadly and may include an intermediate member between a connection of elements and relative movement between elements. Therefore, the connection does not necessarily imply that two elements are directly connected/coupled and in a fixed relationship with each other. The use of "for example" throughout the specification should be broadly explained and used to provide non-limiting examples of implementations of the present disclosure, and the present disclosure is not limited to such examples. It is intended that all matters included in the above description or shown in the drawings should be construed as merely illustrative and not restrictive. Changes in details or structures can be made without departing from this disclosure.

The above has only described preferred embodiments of the present application, and is not intended to limit the present application. Any modification, equivalent replacement and improvement made within the spirit and principle of the present application shall be included within the protection scope of the application.

## Claims

1. A light and color adjustment circuit of a smart lamp, the light and color adjustment circuit is connected to a light emitting module comprising a string of green LEDs and a string of red LEDs, and further comprising a first string of blue LEDs and a second string of blue LEDs emitting light with different preset wavelengths, **characterized in that**, the light and color adjustment circuit comprises:
an induction circuit, configured to acquire illumination intensity of a surrounding preset area and output a induction signal;
a filter circuit, connected to the induction circuit and configured to filter the induction signal;
a radio frequency circuit, connected to the filter circuit and configured to output a feedback signal according to the filtered induction signal; and
a control circuit, connected to the radio frequency circuit and the light emitting module, and configured to adjust luminous flux of the first string of blue LEDs, the second string of blue LEDs, the string of green LEDs and the string of red LEDs according to the feedback signal to synthesize multiple modes of spectra.

2. The light and color adjustment circuit according to claim 1, **characterized in that**, the light and color adjustment circuit further comprises:
a rectifier circuit, connected to a power supply circuit and configured to rectify a power supply signal output by the power supply circuit.

3. The light and color adjustment circuit according to claim 2, **characterized in that**, the light and color adjustment circuit further comprises:
an inverter circuit, connected to the rectifier circuit, the control circuit and the radio frequency circuit, and configured to invert the rectified power supply signal and supply power to the control circuit and the radio frequency circuit.

4. The light and color adjustment circuit according to any preceding claim, **characterized in that**, the induction circuit is implemented by an antenna.

5. The light and color adjustment circuit according to any preceding claim, **characterized in that**, the filter circuit comprises a first inductor and a first capacitor, a first end of the first inductor and a first end of the first capacitor are connected to the induction circuit, a second end of the first capacitor is grounded, and a second end of the first inductor is connected to the radio frequency circuit.

6. The light and color adjustment circuit according to any preceding claim, **characterized in that**, the multiple modes comprise a day mode, a night mode, and a reading mode.

7. The light and color adjustment circuit according to any preceding claim, **characterized in that**, a preset wavelength of light emitted by the first string of blue LEDs is from 435 nm to 465 nm, and a preset wavelength of light emitted by the second string of blue LEDs is from 465 nm to 495 nm.

8. The light and color adjustment circuit according to any preceding claim, **characterized in that**, the control circuit is implemented by a single-chip microcomputer.

9. A smart lamp, **characterized in that**, the smart lamp comprises a light emitting module, the light emitting module comprises a string of green LEDs and a string of red LEDs, and further comprises a first string of blue LEDs and a second string of blue LEDs emitting light with a preset wavelength, the smart lamp further comprises:
the light and color adjustment circuit according to any of claims 1-8; and
a power supply circuit configured to provide a power supply signal to the light and color adjustment circuit.

10. The smart lamp according to claim 9, **characterized in that**, the power supply circuit comprises an AC power supply provided with a preset voltage value.
